# EUROPEAN PATENT APPLICATION

(11) **EP 4 745 904 A1**
(43) Date of publication of application: **20.05.2026**
(21) Application number: 25215590.8
(22) Date of filing: 13.11.2025
(51) Int. Cl.: G06V 10/25, G06V 10/44, G06V 20/58, G06V 20/56

(54) **PARKING LOT DETERMINATION DEVICE, VEHICLE CONTROL DEVICE, PARKING LOT DETERMINATION METHOD AND PROGRAM**

(30) Priority: 15.11.2024 JP 2024199489
(71) Applicant: TOYOTA JIDOSHA KABUSHIKI KAISHA, Toyota-Shi, Aichi-Ken 471-8571 (JP)
(72) Inventor: KAMINADE, Takuya, TOYOTA-SHI, AICHI, 471-8571 (JP); OISHI, Masashi, TOYOTA-SHI, AICHI, 471-8571 (JP)
(74) Representative: Cabinet Beau de Loménie

(57) **Abstract**

To prevent the erroneous recognition of multiple parallel lane markings on a road as a parking row, provided is a parking lot determination device comprising: an acquisition unit (13) configured to detect, based on image data surroundings of a host vehicle (1), parking spaces and/or other vehicles, and to acquire a parking row in which the detected parking spaces and/or other vehicles are arranged in a predetermined direction and continuously in a number equal to or greater than a predetermined number; and a determination unit (16) configured to determine whether the host vehicle (1) is present within a parking lot having the parking row, wherein, when it is detected that the other vehicle has passed over the parking space included in the parking row at a speed equal to or higher than a predetermined vehicle speed, the determination unit (16) determines that the parking row is not to be a parking row.

## Description

### CROSS-REFERENCE TO RELATED APPLICATION

This application claims priority to Japanese Patent Application No. JP2024-199489 filed on November 15, 2024, the content of which is hereby incorporated by reference in its entirety into this application and to which the person of the art can refer when considering the present disclosure.

### BACKGROUND OF THE INVENTION

### 1. Field of the Invention

The present disclosure relates to a parking lot determination device, a vehicle control device, a parking lot determination method, and a program.

### 2. Description of the Related Art

For example, Japanese Patent Application Laid-Open (kokai) No. 2023-154553 discloses a device that determines a group of parking spaces and parked vehicles as a "parking row" when a predetermined number or more of them are consecutively arranged, determines whether the host vehicle is present within a parking lot that includes such a parking row, and, when it is determined that the host vehicle is within the parking lot and an erroneous operation of the accelerator pedal has occurred, performs drive force suppression control.

In the technique disclosed in above Patent Document, a group of parking spaces and parked vehicles is recognized as a parking row when a predetermined number or more of them are arranged consecutively. Therefore, for example, in cases where multiple parallel lane markings such as white or yellow lines drawn on the surface of a public road are provided in the widthwise direction to demarcate lanes, there is a possibility that, depending on the positional relationship between these lane markings and other vehicles, such elements may be erroneously recognized as a parking row.

### SUMMARY OF THE INVENTION

One of the objectives of the present disclosure is to effectively prevent the erroneous recognition of multiple parallel lane markings on a public road as a parking row.

A device according to at least one embodiment of the present disclosure is a parking lot determination device comprising:
a parking row acquisition unit configured to detect, based on image data captured by imaging the surroundings of a host vehicle, parking spaces and/or other vehicles in the surroundings of the host vehicle, and to acquire a parking row in which the detected parking spaces and/or other vehicles are arranged in a predetermined direction and continuously in a number equal to or greater than a predetermined number; and
a parking lot determination unit configured to determine whether the host vehicle is present within a parking lot having the parking row,
wherein, when it is detected that the other vehicle has passed over the parking space included in the parking row detected in front of the host vehicle in a traveling direction at a speed equal to or higher than a predetermined vehicle speed, the parking lot determination unit determines that the parking row is not to be a parking row.

### BRIEF DESCRIPTION OF THE DRAWINGS

FIG. 1 is a schematic diagram illustrating a hardware configuration and a software configuration of a vehicle according to the present embodiment.
FIG. 2A is a schematic top view illustrating parking lot demarcation lines and parked vehicles.
FIG. 2B is a schematic top view illustrating parking lot demarcation lines and parked vehicles.
FIG. 3A is a schematic diagram illustrating the determination of a parking row according to the present embodiment.
FIG. 3B is a schematic diagram illustrating the determination of a parking row according to the present embodiment.
FIG. 3C is a schematic diagram illustrating the determination of a parking row according to the present embodiment.
FIG. 4 is schematic diagram illustrating the prevention of erroneous determination of a parking row according to the present embodiment.
FIG. 5 is a flowchart illustrating a routine for determining whether the vehicle is within a parking lot and for performing drive force suppression control, according to the present embodiment.

### DESCRIPTION OF THE EMBODIMENTS

Hereinafter, the parking lot determination device, the vehicle control device, the parking lot determination method, and the program according to the present embodiment will be described with reference to the drawings.

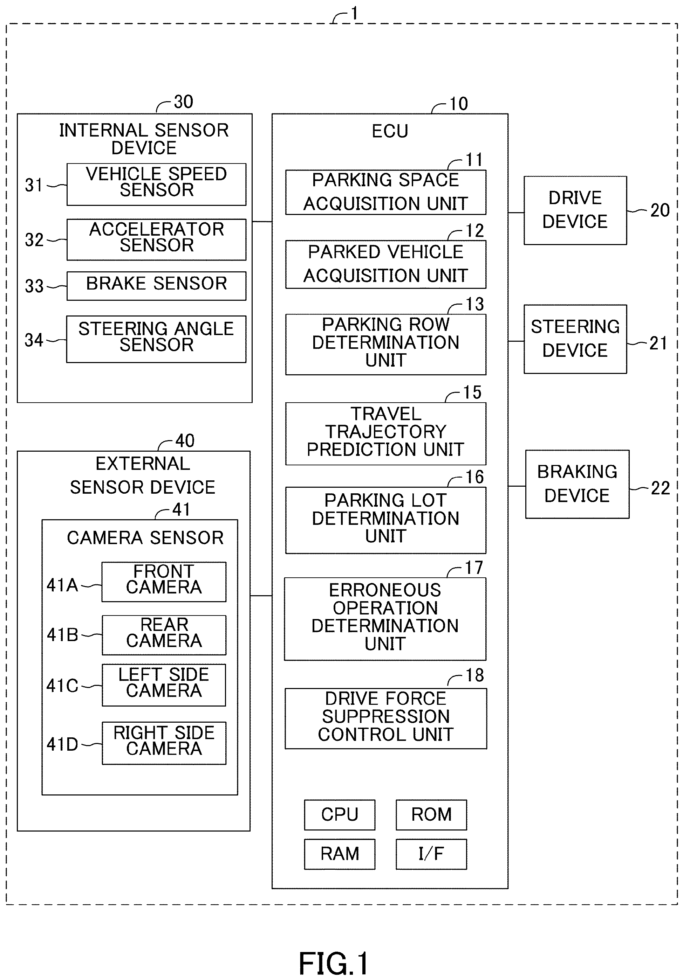

FIG. 1 is a schematic diagram illustrating the hardware configuration of a vehicle 1 according to the present embodiment. In the following description, the vehicle 1 may also be referred to as a host vehicle when it is necessary to distinguish it from other vehicles.

The vehicle 1 includes an Electronic Control Unit (ECU) 10. The ECU 10 comprises a Central Processing Unit (CPU), a Read Only Memory (ROM), a Random Access Memory (RAM), and an interface device, among other components. The CPU is a processor that executes various programs stored in the ROM. The ROM is a non-volatile memory that stores data and other information necessary for the CPU to execute various programs. The RAM is a volatile memory that provides a work area in which various programs are deployed when executed by the CPU. The interface device is a communication device used to communicate with external devices.

The ECU 10 serves as the central control device that provides driving assistance to the driver. Driving assistance includes the concept of autonomous driving. The ECU 10 is communicably connected to devices such as a drive device 20, a steering device 21, a braking device 22, an internal sensor device 30, and an external sensor device 40.

The drive device 20 generates driving force to be transmitted to the drive wheels of the vehicle 1. Examples of the drive device 20 include an electric motor and an engine. The steering device 21 applies steering force to the wheels of the vehicle 1. The braking device 22 applies braking force to the wheels of the vehicle 1.

The internal sensor device 30 is a set of sensors that acquire the state of the vehicle 1. Specifically, the internal sensor device 30 includes a vehicle speed sensor 31, an accelerator sensor 32, a brake sensor 33, and a steering angle sensor 34, and the like.

The vehicle speed sensor 31 detects the traveling speed (vehicle speed V) of the vehicle 1. The accelerator sensor 32 detects the amount of operation of an accelerator pedal (not shown) operated by the driver. The brake sensor 33 detects the amount of operation of a brake pedal (not shown) operated by the driver. The steering angle sensor 34 detects the steering angle of a steering wheel or a steering shaft (not shown). The internal sensor device 30 transmits the state of the vehicle 1, as detected by the sensors 31 to 34, to the ECU 10 at predetermined intervals.

The external sensor device 40 is a set of sensors that acquire target information regarding objects around the vehicle 1. Specifically, the external sensor device 40 includes a camera sensor 41. The target information may include, for example, surrounding vehicles, surrounding structures, intersections, traffic lights, traffic signs, parking lot demarcation lines, road white lines, stop lines, and temporary stop lines. The object information around the vehicle 1 acquired by the external sensor device 40 is transmitted to the ECU 10.

The camera sensor 41 captures images of the surroundings of the vehicle 1 and processes the captured image data to obtain images of the vehicle's surroundings. The camera sensor 41 may be, for example, a stereo camera or a monocular camera, and a digital camera equipped with an image sensor such as a CMOS or CCD can be used. In the present embodiment, the camera sensor 41 includes a front camera 41A that captures a forward area of the vehicle 1, a rear camera 41B that captures a rear area, a left-side camera 41C that captures a left-side area, and a right-side camera 41D that captures a right-side area of the vehicle 1. Hereinafter, the plurality of cameras 41A to 41D will be collectively referred to simply as the "camera sensor 41," and the image data captured by the respective cameras 41A to 41D will be collectively referred to as "image data".

Next, the software configuration of the ECU 10 will be described. The ECU 10 includes, as part of its functional elements, a parking space acquisition unit 11, a parked vehicle acquisition unit 12, a parking row determination unit 13, a travel trajectory prediction unit 15, a parking lot determination unit 16, an erroneous operation determination unit 17, and a drive force suppression control unit 18. These functional elements are described as being included in the ECU 10, which is a single hardware unit; however, some of these elements may be provided in a separate ECU from the ECU 10. Moreover, all or part of the functional elements of the ECU 10 may be provided in an information processing device of a facility (e.g., a management center) that is capable of communicating with the vehicle 1.

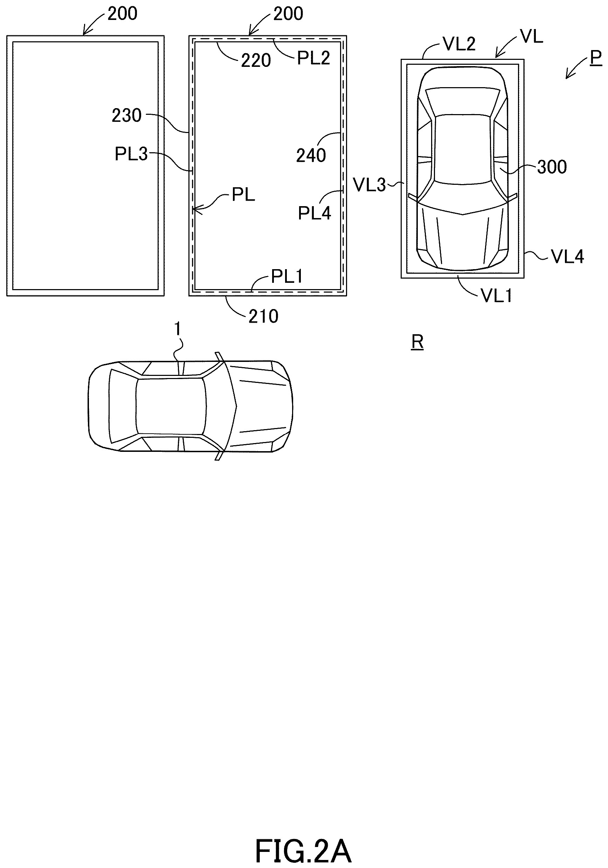

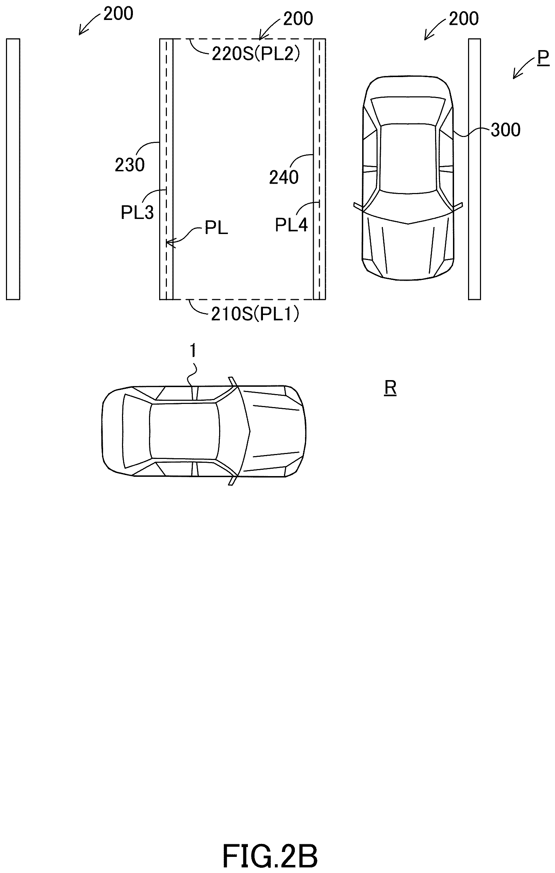

The parking space acquisition unit 11 acquires parking spaces within a parking lot based on image data of the surroundings of the vehicle 1 captured by the camera sensor 41. FIGS. 2A and 2B are a schematic diagram illustrating an example of parking demarcation lines 200 drawn on the surface of a parking lot P. In FIGS. 2A and 2B, reference numeral 300 denotes parked vehicles in the parking lot P, and reference symbol R denotes a passage R through which the vehicle 1 travels after entering the parking lot P. The parking space acquisition unit 11 performs image analysis processing such as edge extraction, pattern matching, and feature point extraction on the image data captured by the camera sensor 41, thereby extracting the parking demarcation lines 200 from the image data and acquiring the parking spaces PL based on the extracted demarcation lines 200. Here, the parking demarcation lines 200 refer to white lines or the like drawn on the surface of the parking lot P to demarcate a parking space PL for one vehicle. Whether the extracted parking demarcation lines 200 actually define a parking space PL can be determined, for example, by comparing the dimensions of the area defined by the demarcation lines 200 with the standard dimensions (width and depth) of parking spaces in general public parking lots.

In the example shown in FIG. 2A, the parking demarcation lines 200 are drawn on the road surface as substantially rectangular solid lines. In this case, the parking space acquisition unit 11 extracts, from a pair of parking demarcation lines 210 and 220 that extend approximately parallel to the extending direction of the passage R, the parking demarcation line 210 located on the passage R side as the front boundary line PL1, and the parking demarcation line 220 located farther from the passage R than the line 210 as the rear boundary line PL2. Further, from a pair of parking demarcation lines 230 and 240 that intersect the lines 210 and 220 substantially perpendicularly, the parking space acquisition unit 11 extracts the parking demarcation line 230 on the left side (when viewed from the passage R side) as the left boundary line PL3, and the parking demarcation line 240 on the right side as the right boundary line PL4.

In the example shown in FIG. 2B, the parking demarcation lines 200 are drawn as two parallel straight lines extending in a direction substantially perpendicular to the extending direction of the passage R, and a vehicle is parked between these two parallel lines. In this case, the parking space acquisition unit 11 extracts, from the two parallel parking demarcation lines 230 and 240 drawn on the road surface, the parking demarcation line 230 located on the left side (when viewed from the passage R side) as the left boundary line PL3, and the line 240 located on the right side as the right boundary line PL4. The parking space acquisition unit 11 also extracts a first virtual parking demarcation line 210S, which connects the ends of lines 230 and 240 on the passage R side, as the front boundary line PL1, and a second virtual parking demarcation line 220S, which connects the ends of lines 230 and 240 on the side opposite to the passage R, as the rear boundary line PL2.

The parking space acquisition unit 11 acquires the position information of the extracted boundary lines PL1 to PL4 relative to the vehicle 1 (e.g., coordinates in an XY plane coordinate system with the position of the vehicle 1 as the origin). The parking space acquisition unit 11 transmits the acquired position information of the boundary lines PL1 to PL4 to the parking row determination unit 13 at predetermined intervals.
It should be noted that the types of parking demarcation lines 200 drawn on the surface of the parking lot P are not limited to the examples shown in FIGS. 2A and 2B, and may include other types such as a combination of these lines or lines drawn as dashed lines.

The other vehicle acquisition unit (parked vehicle acquisition unit) 12 acquires vehicle contour lines, which represent the boundaries between other vehicles 300 and the road surface (hereinafter referred to as "other vehicle contour lines"), based on image data of the surroundings of the vehicle 1 captured by the camera sensor 41. In FIGS. 2A and 2B, reference symbol VL indicates the other vehicle contour lines. Although the actual contour line VL of another vehicle may have a complex shape including side mirrors and the like, in the following description, the other vehicle contour line VL is represented as the smallest rectangular bounding box that encompasses the outer periphery of the body of the other vehicle 300.

First, the other vehicle acquisition unit 12 performs image analysis processing such as edge extraction, pattern matching, and feature point extraction on the image data captured by the camera sensor 41 to determine whether another vehicle 300 appears in the image data. If the presence of another vehicle 300 is detected in the image data, the other vehicle acquisition unit 12 identifies the smallest rectangular bounding box that encompasses the other vehicle 300 in the image and extracts this rectangle as the other vehicle contour line VL. Among the sides of the identified bounding box, the portion corresponding to the front end of the other vehicle 300 is extracted as the front contour line VL1, the portion corresponding to the rear end as the rear contour line VL2, the portion corresponding to the left end as the left contour line VL3, and the portion corresponding to the right end as the right contour line VL4. The other vehicle acquisition unit 12 acquires the position information of the extracted contour lines VL1 to VL4 relative to the vehicle 1 (e.g., coordinates in an XY plane coordinate system with the position of the vehicle 1 as the origin), and transmits the acquired position information to the parking row determination unit 13 at predetermined intervals.

The parking row determination unit 13 determines whether the parking spaces PL and the other vehicle contour lines VL form a continuous parking row, based on the position information of the parking spaces PL transmitted from the parking space acquisition unit 12 and the position information of the other vehicle contour lines VL transmitted from the other vehicle acquisition unit 11B. In the following description, the longitudinal direction of the parking spaces PL and the other vehicle contour lines VL is defined as the "vertical direction," and the direction substantially orthogonal to the longitudinal direction is defined as the "horizontal direction". Although the following explanation describes examples in which the parking spaces PL and the other vehicle contour lines VL are adjacent in the horizontal direction, similar processing applies in cases where they are adjacent in the vertical direction, and such explanations will be omitted.

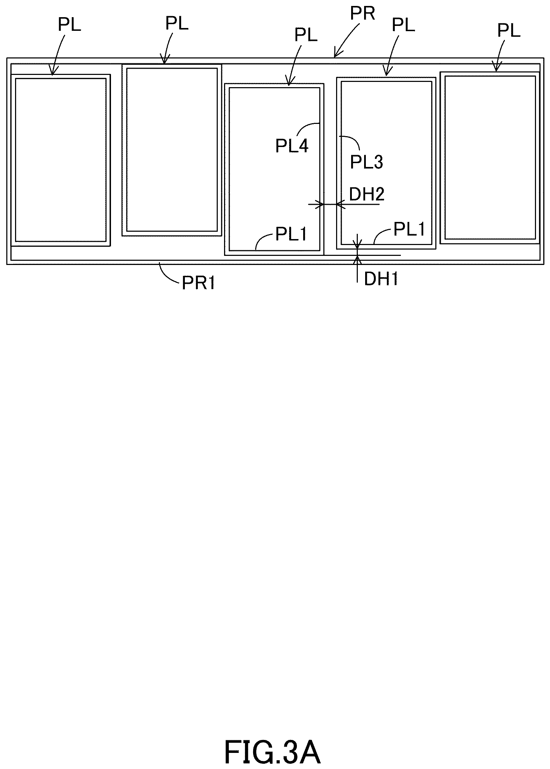

As shown in FIG. 3A, when adjacent parking spaces PL are obtained from image data, the parking row determination unit 13 calculates a longitudinal separation distance DH1 between the front boundary lines PL1 of the adjacent parking spaces. It then determines whether a first condition is satisfied, wherein the separation distance DH1 is equal to or less than a predetermined first threshold. Note that this first condition may alternatively be determined based on the separation distance between the rear boundary lines PL2. In addition, the parking row determination unit 13 calculates a lateral separation distance DH2 between the left and right boundary lines PL3 and PL4 of the adjacent parking spaces PL, and determines whether a second condition is satisfied, wherein the separation distance DH2 is equal to or less than a predetermined second threshold. The first and second thresholds are not particularly limited but may be set based on standard dimensions used in public parking facilities. If both the first and second conditions are satisfied, the parking row determination unit 13 determines that the adjacent parking spaces PL form a continuous row in the horizontal direction.

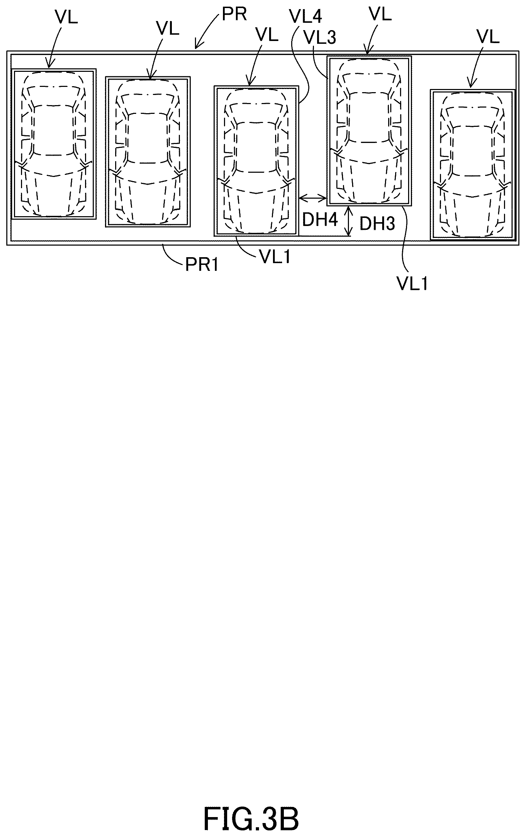

As shown in FIG. 3B, when adjacent other vehicle contour lines VL are obtained from image data, the parking row determination unit 13 calculates a longitudinal separation distance DH3 between the front contour lines VL1 of the adjacent vehicles, and determines whether a third condition is satisfied, wherein the separation distance DH3 is equal to or less than a predetermined third threshold. Note that this third condition may alternatively be determined based on the separation distance between the rear contour lines VL2. Furthermore, the parking row determination unit 13 calculates a lateral separation distance DH4 between the left and right contour lines VL3 and VL4 of the adjacent vehicles, and determines whether a fourth condition is satisfied, wherein the separation distance DH4 is equal to or less than a predetermined fourth threshold. While the third and fourth thresholds are not particularly limited, it is preferable that at least the fourth threshold be set greater than the aforementioned second threshold. If both the third and fourth conditions are satisfied, the parking row determination unit 13 determines that the adjacent other vehicle contour lines VL form a continuous row in the horizontal direction.

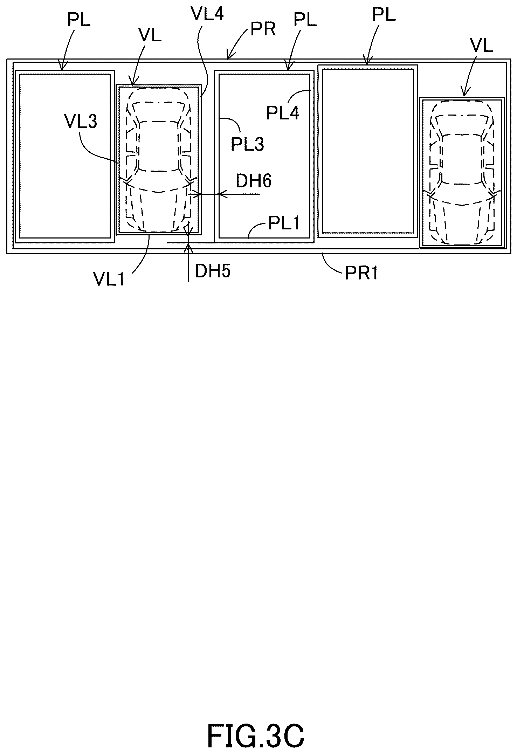

As shown in FIG. 3C, when both parking spaces PL and other vehicle contour lines VL are obtained from image data, the parking row determination unit 13 calculates a longitudinal separation distance DH5 between the front boundary line PL1 of a parking space and the front contour line VL1 of an adjacent vehicle, and determines whether a fifth condition is satisfied, wherein the separation distance DH5 is equal to or less than a predetermined fifth threshold. Note that this fifth condition may alternatively be determined based on the separation distance between the rear boundary line PL2 and the rear contour line VL2.
The parking row determination unit 13 also calculates a lateral separation distance DH6 between the left and right boundary lines PL3, PL4 of the parking space and the left and right contour lines VL3, VL4 of the vehicle, and determines whether a sixth condition is satisfied, wherein the separation distance DH6 is equal to or less than a predetermined sixth threshold. While the fifth and sixth thresholds are not particularly limited, it is preferable that the sixth threshold be set to a value greater than the aforementioned second threshold and smaller than the aforementioned fourth threshold. If both the fifth and sixth conditions are satisfied, the parking row determination unit 13 determines that the adjacent parking space PL and other vehicle contour line VL form a continuous row in the horizontal direction.

The parking row determination unit 13 determines that a rectangular area PR constitutes a parking row when the number of consecutively aligned parking spaces PL, the number of consecutively aligned other vehicle contour lines VL, or the number of consecutively aligned parking spaces PL and other vehicle contour lines VL (regardless of order) is equal to or greater than a predetermined threshold number (e.g., 3 to 5). By determining that a group of consecutive parking spaces PL, consecutive other vehicle contour lines VL, or a combination thereof constitutes a parking row only when their number exceeds a threshold, the system can effectively prevent misjudging other markings such as stop lines or pedestrian crossings on public roads, or temporarily stopped vehicles (e.g., due to a red light) around the subject vehicle 1, as part of a parking row.

The parking row determination unit 13 extracts a rectangular frame PR that defines the parking row from the image data and acquires the positional information of each of the straight lines PR1 to PR4 forming the frame PR with respect to the subject vehicle 1 (for example, coordinates in an XY plane coordinate system with the position of vehicle 1 as the origin). Furthermore, the parking row determination unit 13 periodically transmits the acquired positional information of each straight line PR1 to PR4 to the in-parking-lot determination unit 16. Hereinafter, the straight line PR1 of the rectangular frame PR that faces the passage R is referred to as the "front parking row line," and the rectangular frame PR itself is referred to as the "parking row."

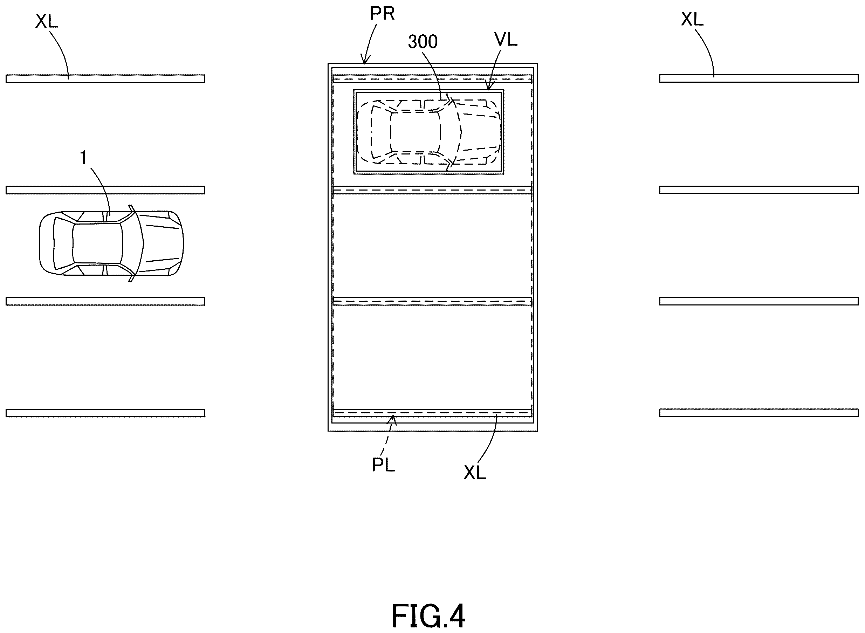

As shown in FIG. 4, on general roads, multiple lane demarcation lines XL-such as white or yellow lines used to separate lanes-may be drawn in parallel across the width of the roadway. Depending on the positional relationship between these lane demarcation lines XL and other vehicles 300 traveling ahead of the subject vehicle 1 (e.g., a leading vehicle or an oncoming vehicle traveling in an adjacent lane), there is a possibility that the system may erroneously recognize the minimal bounding rectangular area PR that encompasses these elements as a parking row.

Even if the number of consecutively aligned parking spaces PL and other vehicle contour lines VL (regardless of order) exceeds the threshold number, the parking row determination unit 13 determines that the minimal bounding rectangular area PR does not constitute a parking row if the other vehicle 300 passes over a parking space PL - considered as a component of a parking row - at or above a predetermined speed Vv. This allows the system to effectively prevent the misrecognition of lane demarcation lines XL drawn in parallel on general roads, together with the other vehicles 300, as a parking row. The speed of the other vehicle 300 may be obtained based on detection results from the external sensor device 40, or - if the vehicle supports V2V (vehicle-to-vehicle) communication - through V2V communication. The predetermined speed Vv is not particularly limited but may, for example, be set to a speed generally not associated with driving within a parking area (e.g., approximately 20 km/h or more).

The travel trajectory prediction unit 15 calculates a predicted travel trajectory of the vehicle 1 based on the driving state of the vehicle 1 acquired by the vehicle state acquisition device 30. Here, the predicted travel trajectory refers to the path that the vehicle 1 is expected to follow if its current driving state is maintained. The predicted travel trajectory can be calculated, for example, based on the vehicle speed V acquired by the vehicle speed sensor 31 and the steering angle acquired by the steering angle sensor 34. The travel trajectory prediction unit 15 transmits the calculated predicted travel trajectory to the parking area determination unit (parking lot determination unit) 16 at a predetermined interval.

The parking area determination unit 16 determines whether the vehicle 1 is present within the parking lot P, based on the position information of the parking row PR relative to the vehicle 1, which is transmitted from the parking row determination unit 13, and the predicted travel trajectory of the vehicle 1, which is transmitted from the travel trajectory prediction unit 15. The parking area determination unit 16 first determines whether the predicted travel trajectory of the vehicle 1, represented in a planar coordinate system, intersects with the front parking row line PR1 of the parking row PR. If it is determined that there is an intersection, the parking area determination unit 16 calculates an estimated arrival time TA until the vehicle 1 reaches the intersection point between the predicted travel trajectory and the front parking row line PR1 from its current position. The estimated arrival time TA may be obtained, for example, by dividing the distance D along the predicted travel trajectory from the current position of the vehicle 1 to the intersection point by the current vehicle speed V (TA = D/V). If the estimated arrival time TA is equal to or less than a predetermined time (e.g., several seconds), the parking area determination unit 16 determines that the vehicle 1 is present within the parking lot P. On the other hand, if the estimated arrival time TA exceeds the predetermined time, the parking area determination unit 16 determines that the vehicle 1 is not present within the parking lot P.

The erroneous operation determination unit 17 determines whether the driver of the vehicle 1 has mistakenly depressed the accelerator pedal, i.e., whether an erroneous accelerator operation has occurred. Specifically, the erroneous operation determination unit 17 determines that an erroneous accelerator operation has been performed when all of the following conditions are satisfied:
a first determination condition that the vehicle speed V of the vehicle 1 is below a predetermined speed threshold V_{Min},
a second determination condition that the accelerator pedal operation amount (accelerator operation amount) AP is equal to or greater than a predetermined operation amount threshold AP_{Max},
a third determination condition that the accelerator pedal operation speed APV is equal to or greater than a predetermined operation speed threshold APV_{Max},
a fourth determination condition that no brake operation is being performed, and
a fifth determination condition that no turn signal is being operated.

On the other hand, if at least one of the first to fifth determination conditions is not satisfied, the erroneous operation determination unit 17 determines that no erroneous accelerator operation has been performed by the driver. It should be noted that one or more of the first to fifth determination conditions may be omitted for determining erroneous accelerator operation, or other conditions may be additionally included.

The drive force suppression control unit 18 executes drive force suppression control that controls the operation of the drive device 20 such that the actual acceleration GA of the vehicle 1 does not exceed a predetermined limit acceleration G_{Lim}, when the parking area determination unit 16 determines that the vehicle 1 is within the parking area P, and the erroneous operation determination unit 17 determines that the driver has performed an erroneous accelerator operation. By executing drive force suppression control that limits the actual acceleration GA of the vehicle 1 to equal to or less than the limit acceleration G_{Lim} when the driver performs an erroneous accelerator operation, it becomes possible to effectively suppress unintended rapid acceleration of the vehicle 1 by the driver. Moreover, by using the determination that the vehicle 1 is within the parking area P as a condition for executing the drive force suppression control, it is possible to effectively prevent unnecessary activation of the drive force suppression control on public roads or the like. After initiating the drive force suppression control, the drive force suppression control unit 18 terminates the control (i.e., cancels the limit acceleration G_{Lim}) when the accelerator operation amount AP decreases to equal to or less than a predetermined end threshold APE. Note that such drive force suppression control may be applied to vehicles capable of autonomous driving when transitioning from autonomous driving to manual driving by the driver.

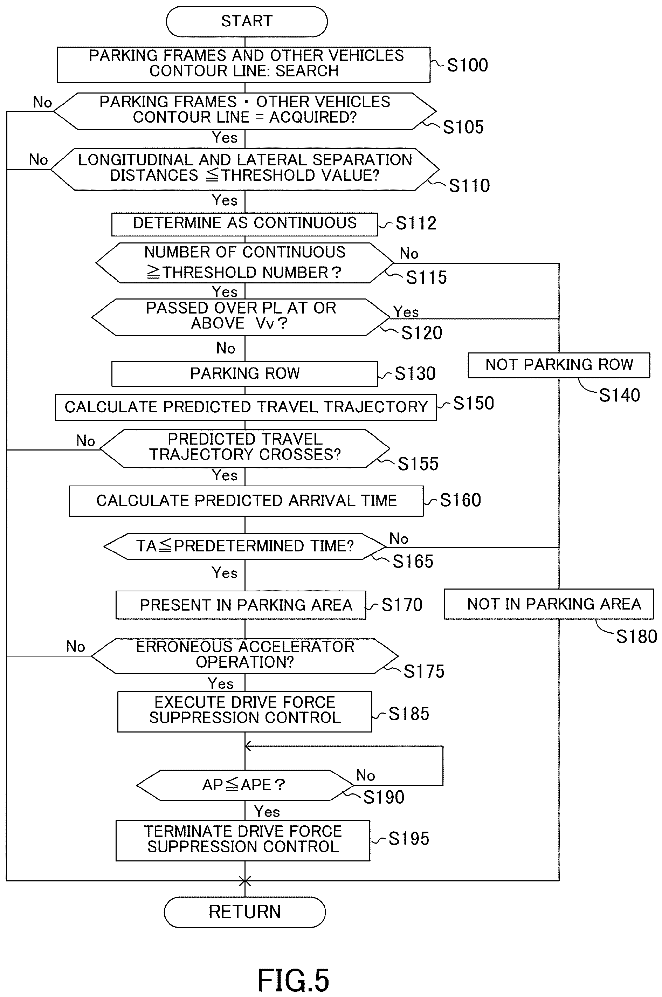

Next, a routine for determining whether the vehicle is inside a parking area and for detecting erroneous accelerator operation by the ECU 10 will be described with reference to the flowchart shown in FIG. 5. When the ignition switch or the start button of the vehicle 1 is turned ON, the ECU 10 repeatedly executes the routine shown in FIG. 5 at a predetermined cycle.

In step S100, the ECU 10 searches for parking frames (PL) around the vehicle 1 and contour lines of other vehicles (VL), based on image data captured by the camera sensor 41. Next, in step S105, the ECU 10 determines whether at least one of the parking frames PL or the contour lines of other vehicles VL has been successfully acquired from the image data. If the determination result is affirmative (Yes), the ECU 10 proceeds to the processing of step S110. On the other hand, if the determination result is negative (No), the ECU 10 returns this routine.

In step S110, the ECU 10 determines whether the adjacent parking frames (PL) or contour lines of other vehicles (VL) satisfy a condition in which the longitudinal and lateral separation distances are equal to or less than a predetermined threshold. If the condition is satisfied (Yes), the ECU 10 proceeds to step S112, determines that the adjacent parking frames PL or contour lines VL are continuous, and advances to step S115. On the other hand, if the condition is not satisfied in step S110 (No), the ECU 10 returns this routine.

In step S115, the ECU 10 determines whether the number of continuous parking frames (PL), the number of continuous contour lines of other vehicles (VL), or the number of continuous parking frames (PL) and contour lines of other vehicles (VL) satisfies a condition of being equal to or greater than a threshold number. If the condition is satisfied (Yes), the ECU 10 proceeds to step S120. On the other hand, if the condition is not satisfied (No), the ECU 10 proceeds to step S140, determines that the detected elements do not constitute a parking row, and further proceeds to step S180 to determine that the vehicle 1 is not located within a parking area, and returns this routine.

In step S120, it is determined whether the other vehicle 300 has passed over the parking frame (PL), which constitutes a part of the parking row, at or above the predetermined vehicle speed (Vv). If the other vehicle 300 has passed over the parking frame (PL) at or above the predetermined vehicle speed Vv (Yes), the ECU 10 proceeds to step S140, determines that the detected elements do not constitute a parking row, and returns this routine. On the other hand, if the other vehicle 300 has not passed over the parking frame (PL) at or above the predetermined vehicle speed Vv (No), the ECU 10 proceeds to step S130, determines that the continuous parking frames (PL) and contour lines of other vehicles (VL) constitute the parking row, obtains the positional information of the parking row (PR), and proceeds to step S150.

In step S150, the ECU 10 calculates the predicted travel trajectory TP of the vehicle 1. Next, in step S155, the ECU 10 determines whether the calculated predicted travel trajectory TP intersects with the front-side parking row line PR1 of the parking row PR. If they intersect (Yes), the ECU 10 proceeds to step S160. On the other hand, if they do not intersect (No), the ECU 10 returns this routine.

In step S160, the ECU 10 calculates a predicted arrival time TA, which is the time it will take for the vehicle 1 to reach the intersection point between its current position and the point where the predicted travel trajectory intersects with the front-side parking row line PR1. Next, in step S165, the ECU 10 determines whether the predicted arrival time TA is equal to or less than a predetermined time. If the predicted arrival time TA is equal to or less than the predetermined time (Yes), the ECU 10 proceeds to step S170. On the other hand, if the predicted arrival time TA exceeds the predetermined time (No), the ECU 10 proceeds to step S180, determines that the vehicle 1 is not present within the parking area, and returns this routine.

In step S170, the ECU 10 determines that the vehicle 1 is present in the parking area. Next, in step S175, the ECU 10 determines whether the driver has performed an erroneous accelerator operation. If all of the above-mentioned first to fifth determination conditions are satisfied (Yes), the ECU 10 determines that the driver has performed an erroneous accelerator operation and proceeds to step S185. On the other hand, if at least one of the above-mentioned first to fifth erroneous operation conditions is not satisfied (No), the ECU 10 determines that the driver has not performed an erroneous accelerator operation and returns this routine.

In step S185, the ECU 10 executes drive force suppression control. Next, in step S190, the ECU 10 determines whether the accelerator operation amount (AP) has decreased to or below the termination threshold value (APE). If the accelerator operation amount (AP) has not decreased to or below the termination threshold value APE (No), the ECU 10 repeats the determination of step S190. On the other hand, if the accelerator operation amount (AP) has decreased to or below the termination threshold value APE (Yes), the ECU 10 proceeds to step S195, terminates the drive force suppression control, and returns this routine.

As described above, the parking lot determination device, vehicle control device, parking lot determination method, and program according to the present embodiment have been explained. However, the present disclosure is not limited to the above embodiment, and various modifications may be made without departing from the scope and spirit of the present invention.

## Claims

1. A parking lot determination device comprising:
a parking row acquisition unit (13) configured to detect, based on image data captured by imaging the surroundings of a host vehicle (1), parking spaces (PL) and/or other vehicles (300) in the surroundings of the host vehicle (1), and to acquire a parking row (PR) in which the detected parking spaces (PL) and/or other vehicles (300) are arranged in a predetermined direction and continuously in a number equal to or greater than a predetermined number; and
a parking lot determination unit (16) configured to determine whether the host vehicle (1) is present within a parking lot having the parking row (PR),
wherein the parking lot determination unit (16) is configured to determine that the parking row (PR) is not to be a parking row when it is detected that the other vehicle (300) has passed over the parking space (PL) included in the parking row (PR) detected in front of the host vehicle (1) in a traveling direction at a speed equal to or higher than a predetermined vehicle speed.

2. A vehicle control device comprising the parking lot determination device according to claim 1, and further comprising:
an erroneous operation determination unit (17) configured to acquire an operation state of an acceleration operator operated by an occupant of the host vehicle (1) to accelerate the host vehicle (1), and to determine, based on the operation state, whether the occupant has erroneously pressed the acceleration operator; and
a control unit (18) configured to execute drive force suppression control to suppress the drive force of the host vehicle (1) when the parking lot determination unit (16) determines that the host vehicle (1) is present within the parking lot, and the erroneous operation determination unit (17) determines that the occupant has performed the erroneous operation.

3. A parking lot determination method comprising:
detecting, based on image data captured by imaging the surroundings of a host vehicle (1), parking spaces (PL) and/or other vehicles (300) in the surroundings of the host vehicle (1);
acquiring a parking row (PR) in which the detected parking spaces (PL) and/or other vehicles (300) are arranged in a predetermined direction and continuously in a number equal to or greater than a predetermined number; and
determining whether the host vehicle (1) is present within a parking lot having the parking row (PR),
wherein, when it is detected that the other vehicle (300) has passed over the parking space (PL) included in the parking row (PR) detected in front of the host vehicle (1) in the traveling direction at a speed equal to or higher than a predetermined vehicle speed, the parking row (PR) is determined not to be a parking row.

4. A program for operating a computer of a parking lot determination device,
wherein the parking lot determination device comprises:
a parking row acquisition unit (13) configured to detect, based on image data captured by imaging the surroundings of a host vehicle (1), parking spaces (PL) and/or other vehicles (300) in the surroundings of the host vehicle (1), and to acquire a parking row (PR) in which the detected parking spaces (PL) and/or other vehicles (300) are arranged in a predetermined direction and continuously in a number equal to or greater than a predetermined number; and
a parking lot determination unit (16) configured to determine whether the host vehicle (1) is present within a parking lot having the parking row (PR),
wherein the program is configured to execute a process in which, when it is detected that another vehicle (300) has passed over a parking space (PL) included in the parking row (PR) detected in front of the host vehicle (1) in the traveling direction at a speed equal to or higher than a predetermined vehicle speed, the parking row (PR) is determined not to be a parking row.
